# EUROPÄISCHE PATENTSCHRIFT

(11) **EP 0 716 670 B1**
(45) Veröffentlichungstag und Bekanntmachung des Hinweises auf die Patenterteilung: **28.04.1999**
(21) Anmeldenummer: 94926852.8
(22) Anmeldetag: 19.08.1994
(51) Int. Cl.: C09B 29/36, B41M 5/38, C09B 67/22

(54) **AZOFARBSTOFFE MIT EINER DIAZOKOMPONENTE AUS DER ANILINREIHE UND EINER KUPPLUNGSKOMPONENTE AUS DER TRIAZOLOPYRIDINREIHE**
AZO DYES WITH A DIAZO COMPONENT OF THE ANILIN SERIES AND A COUPLING COMPONENT OF THE TRIAZOLOPYRIDINE SERIES
COLORANTS AZOIQUES COMPORTANT UN CONSTITUANT DIAZO DE LA SERIE ANILINE ET UN CONSTITUANT DE COPULATION DE LA SERIE TRIAZOLOPYRIDINE

(30) Priorität: 31.08.1993 DE 4329296
(43) Veröffentlichungstag der Anmeldung: 19.06.1996
(73) Patentinhaber: BASF AKTIENGESELLSCHAFT, 67056 Ludwigshafen (DE)
(72) Erfinder: SCHEFCZIK, Ernst, D-67069 Ludwigshafen (DE); BACH, Volker, D-67434 Neustadt (DE); REICHELT, Helmut, D-67435 Neustadt (DE); GRUND, Clemens, D-68199 Mannheim (DE)
(86) Internationale Anmeldenummer: EP9402756
(87) Internationale Veröffentlichungsnummer: WO9506687

(56) Entgegenhaltungen:
- EP-A- 0 413 226
- DE-A- 4 020 768

## Beschreibung

Die vorliegende Erfindung betrifft neue Triazolopyridinazofarbstoffe der Formel I 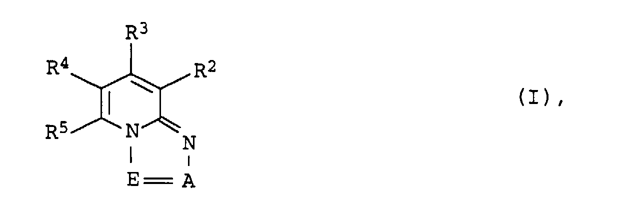 in der
- A: Stickstoff,
- E: einen Rest der Formel C-R¹, worin R¹ für C₁-C₂₀-Alkyl, das gegebenenfalls substituiert ist und durch 1 bis 4 Sauerstoffatome in Etherfunktion unterbrochen sein kann, gegebenenfalls substituiertes Phenyl, Mercapto oder gegebenenfalls substituiertes C₁-C₂₀-Alkylthio steht,
einer der beiden Reste R² und R⁴ Cyano, Carbamoyl, Carboxyl oder C₁-C₄-Alkoxycarbonyl und der andere einen Rest der Formel . D-N=N-, worin D für den Rest einer Diazokomponente aus der Anilinreihe steht,
- R³: C₁-C₄-Alkyl, das gegebenenfalls durch ein Sauerstoffatom in Etherfunktion unterbrochen ist, oder Phenyl und
- R⁵: Hydroxy, Mercapto, den Rest -NY¹Y², wobei Y¹ und Y² gleich oder verschieden sind und unabhängig voneinander jeweils für Wasserstoff oder C₁-C₄-Alkyl oder zusammen mit dem sie verbindenden Stickstoffatom für einen 5- oder 6-gliedrigen gesättigten heterocyclischen Rest stehen, oder den Rest einer CH-aciden Verbindung bedeuten,
sowie deren Verwendung zum Färben oder Bedrucken von textilen Materialien.

Aus der DE-A-4 020 768 sind bereits Phenylazofarbstoffe bekannt, die eine Kupplungskomponente aus der 1,2,4-Triazolo[1,5-a]-pyridinreihe aufweisen. Die Phenylazogruppierung befindet sich dabei in Ringposition 4 des heterocyclischen Systems. Es hat sich jedoch gezeigt, daß diese Farbstoffe noch Mängel in ihren anwendungstechnischen Eigenschaften aufweisen. EP-A-413 226 beschreibt [1,2,4]Triazalo[1,5-a]pyridine.

Aufgabe der vorliegenden Erfindung war es daher, neue Azofarbstoffe mit einer Kupplungskomponente aus der Triazolopyridinreihe und einer Diazokomponente aus der Anilinreihe bereitzustellen, die über hohe Thermofixierechtheit, hohe Brillanz sowie hohe Farbstärke verfügen.

Demgemäß wurden die eingangs näher bezeichneten Triazolopyridinazofarbstoffe der Formel I gefunden.

Die Farbstoffe der Formel I können in mehreren tautomeren Formen auftreten, die alle vom Patentanspruch umfaßt werden. Beispielsweise können die Farbstoffe mit R² = D-N=N- u.a. in folgenden tautomeren Formen auftreten:

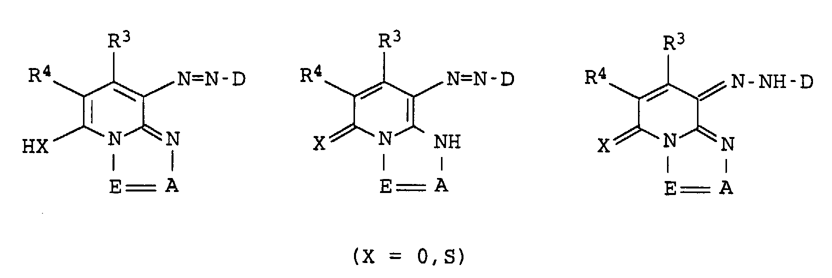

Wenn in Formel I substituierte C₁-C₂₀-Alkylreste auftreten, so können als Substituenten z.B. gegebenenfalls substituiertes Phenyl, gegebenenfalls substituiertes Phenoxy, Carboxyl oder C₁-C₂₀-Alkoxycarbonyl, dessen Alkylkette gegebenenfalls durch 1 bis 4 Sauerstoffatome in Etherfunktion unterbrochen und durch Phenyl oder Phenoxy substituiert sein kann, in Betracht kommen. Die Alkylreste weisen dabei in der Regel 1 oder 2 Substituenten auf.

Wenn in Formel I Alkylreste auftreten, die durch Sauerstoffatome in Etherfunktion unterbrochen sind, so sind solche Alkylreste bevorzugt, die durch 1 oder 2 Sauerstoffatome in Etherfunktion unterbrochen sind.

Wenn in Formel I substituierte Phenylreste auftreten, so können als Substituenten z.B. C₁-C₄-Alkyl, C₁-C₄-Alkoxy, Halogen, dabei insbesondere Chlor oder Brom, Nitro, Cyano oder Carboxyl in Betracht kommen. Die Phenylreste weisen dabei in der Regel 1 bis 3 Substituenten auf.

Wenn R⁵ in Formel I einen Rest einer CH-aciden Verbindung bedeutet, so kann sich dieser Rest z.B. von Nitromethan, Nitroethan oder von Verbindungen der Formeln IV bis IX 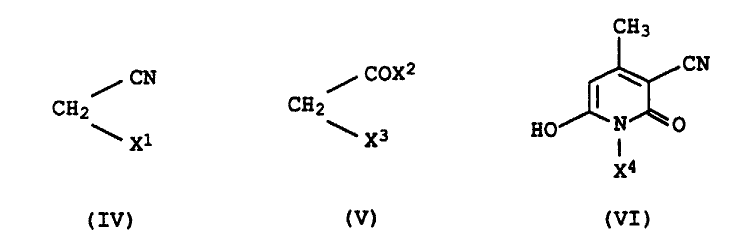 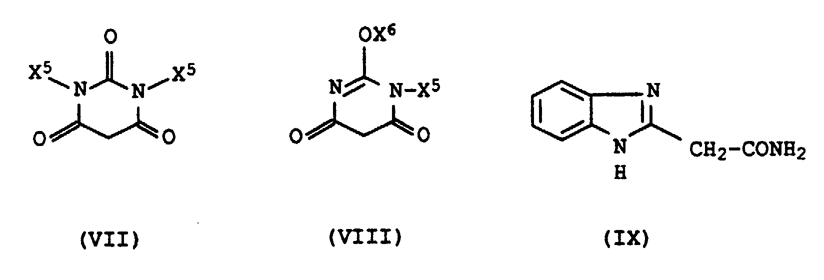 ableiten, wobei
- X¹: Cyano, Nitro, C₁-C₄-Alkanoyl, gegebenenfalls durch C₁-C₄-Alkyl, C₁-C₄-Alkoxy oder Halogen substituiertes Benzoyl, C₁-C₄-Alkylsulfonyl, gegebenenfalls durch C₁-C₄-Alkyl, C₁-C₄-Alkoxy oder Halogen substituiertes Phenylsulfonyl, Carboxyl, C₁-C₄-Alkoxycarbonyl, Phenoxycarbonyl, Carbamoyl, C₁-C₄-Mono- oder -Dialkylcarbamoyl, gegebenenfalls durch C₁-C₄-Alkyl, C₁-C₄-Alkoxy oder Halogen substituiertes Phenylcarbamoyl, gegebenenfalls durch C₁-C₄-Alkyl, C₁-C₄-Alkoxy, Halogen oder Nitro substituiertes Phenyl, Benzthiazol-2-yl, Benzimidazol-2-yl, 5-Phenyl-1,3,4-thiadiazol-2-yl oder 2-Hydroxychinoxalin-3-yl,
- X²: C₁-C₄-Alkyl oder C₁-C₄-Alkoxy,
- X³: C₁-C₄-Alkoxycarbonyl, Phenylcarbamoyl oder Benzimidazol-2-yl,
- X⁴: Wasserstoff oder C₁-C₆-Alkyl,
- X⁵: Wasserstoff, C₁-C₄-Alkyl oder Phenyl und
- X⁶: C₁-C₄-Alkyl bedeuten.
Dabei sind insbesondere CH-acide Verbindungen der Formel IV, V oder VII zu nennen, wobei
- X¹: Cyano, Acetyl, Benzoyl, C₁-C₄-Alkoxycarbonyl, Phenoxycarbonyl, C₁-C₂-Monoalkylcarbamoyl, Phenylcarbamoyl, Phenyl, Benzimidazol-2-yl, Benzthiazol-2-yl oder 5-Phenyl-1,3,4-thiadiazol-2-yl,
- X²: C₁-C₂-Alkoxy,
- X³: C₁-C₂-Alkoxycarbonyl oder Phenylcarbamoyl und
- X⁵: Methyl bedeuten.

Der Rest D in den erfindungsgemäßen Farbstoffen leitet sich von einer Diazokomponente aus der Anilinreihe ab.

Geeignete Diazokomponenten D-NH2 gehorchen beispielsweise der Formel II 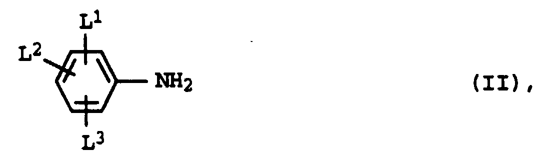 in der
L¹, L² und L³ gleich oder verschieden sind und unabhängig voneinander jeweils Wasserstoff, C₁-C₁₃-Alkyl, C₁-C₄-Alkoxy, das gegebenenfalls durch C₁-C₄-Alkoxy, Halogen-C₁-C₄-alkoxy, Hydroxy-C₁-C₄-alkoxy oder Cyano-C₁-C₄-alkoxy substituiert ist, C₁-C₄-Alkylthio, das gegebenenfalls durch C₁-C₄-Alkoxy oder C₁-C₄-Alkylthio substituiert ist, Phenoxy, Halogen, Cyano, C₁-C₄-Alkanoylamino, C₁-C₄-Alkylsulfonylanino, den Rest NY¹Y², worin Y¹ und Y² jeweils die obengenannte Bedeutung besitzen, oder L¹ und L² zusammen den Rest der Formel O-C₂H₄-O bedeuten.

Reste R¹, R³, L¹, L² und L³ sind z.B. Methyl, Ethyl, Propyl, Iso- propyl, Butyl, Isobutyl oder sec-Butyl.

Reste R¹, L¹, L² und L³ sind weiterhin z.B. Pentyl, Isopentyl, Neopentyl, tert-Pentyl, Hexyl, Heptyl, 1-Ethylpentyl, Octyl, Isooctyl, 2-Ethylhexyl, Nonyl, Isononyl, Decyl, Isodecyl, Undecyl, Dodecyl, Tridecyl oder Isotridecyl (Die obigen Bezeichnungen Isooctyl, Isononyl, Isodecyl und Isotridecyl sind Trivialbezeichnungen und stammen von den nach der Oxosynthese erhaltenen Alkoholen - vgl. dazu Ullmanns Enzyklopädie der technischen Chemie, 4. Auflage, Band 7, Seiten 215 bis 217, sowie Band 11, Seiten 435 und 436.).

Reste R¹ sind weiterhin z.B. Tetradecyl, Pentadecyl, Hexadecyl, Heptadecyl, Octadecyl, Nonadecyl, Eicosyl, 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Propoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 2- oder 4-Butoxybutyl, 4,8-Dioxadecyl, 3,6,9-Trioxadecyl, 3,6,9-Trioxaundecyl, 3,6,9,12-Tetraoxatridecyl, 3,6,9,12-Tetraoxatetradecyl, 2-Carboxyethyl, 2-Methoxycarbonylethyl, Benzyl, 1- oder 2-Phenylethyl, 2-, 3,- oder 4-Methylbenzyl, 2-, 3- oder 4-Methoxybenzyl, 2-, 3- oder 4-Chlorbenzyl, 2-, 3- oder 4-Nitrobenzyl, 3-Benzylowpropyl, Phenoxymethyl, 6-Phenoxy-4-oxahexyl, 8-Phenoxy-4-oxaoctyl, Phenyl, 2-, 3- oder 4-Methylphenyl, 2-, 3- oder 4-Methoxyphenyl, 2-, 3- oder 4-Chlorphenyl, 2-, 3- oder 4-Nitrophenyl, 2-, 3- oder 4-Carboxylphenyl, Methylthio, Ethylthio, Propylthio, Isopropylthio, Butylthio, Isobutylthio, sec-Butylthio, Pentylthio, Isopentylthio, Neopentylthio, tert-Pentylthio, Hexylthio, Heptylthio, 1-Ethylpentylthio, Octylthio, Isooctylthio, 2-Ethylhexylthio, Nonylthio, Isononylthio, Decylthio, Isodecylthio, Undecylthio, Dodecylthio, Tridecylthio, Isotridecylthio, Tetradecylthio, Pentadecylthio, Hexadecylthio, Heptadecylthio, Octadecylthio, Nonadecylthio oder Eicosylthio.

Reste R³ sind weiterhin z.B. Methoxymethyl, Ethoxymethyl, 2-Methoxyethyl oder 2-Ethoxyethyl.

Reste R² sind z.B. Methoxycarbonyl, Ethoxycarbonyl, Propoxycarbonyl, Isopropoxycarbonyl, Butoxycarbonyl, Isobutoxycarbonyl oder sec-Butoxycarbonyl.

Reste R⁵ sind z.B., wie weiterhin auch die Reste L¹, L² und L³, Amino, Mono- oder Dimethylamino, Mono- oder Diethylamino, Mono- oder Dipropylamino, Mono- oder Diisopropylamino, Mono- oder Dibutylamino, Pyrrolidino, Piperidino, Morpholino, Piperazino oder N-(C₁-C₄-Alkyl)piperazino.

Reste L¹, L² und R³ sind weiterhin z.B. Methoxy, Ethoxy, Propoxy, Isopropoxy, Butoxy, Isobutoxy, sec-Butoxy, 2-Methoxyethoxy, 2-Ethoxyethoxy, 2-Propoxyethoxy, 2-Isopropoxyethoxy, 2-Butoxyethoxy, 2- oder 3-Methowpropoxy, 2- oder 3-Ethoxypropoxy, 2-oder 3-Propoxypropoxy, 2- oder 3-Butoxypropoxy, 2- oder 4-Methoxybutoxy, 2- oder 4-Ethoxybutoxy, 2- oder 4-Propoxybutoxy, 2- oder 4-Butoxybutoxy, 2-(2-Chlorethoxy)ethoxy, 2-(2-Hydroxyethoxy)-ethoxy, 2-(2-cyanoethoxy)ethoxy, Methylthio, Ethylthio, Propylthio, Isopropylthio, Butylthio, 2-Methoxyetbylthio, 2-Methylthioethylthio, Fluor, Chlor, Brom, Fornylamino, Acetylamino, Propionylamino, Butyrylamino, Isobutyrylamino, Methylsulfonylamino, Ethylsulfonylamino, Propylsulfonylamino, Isopropylsulfonylamino oder Butylsulfonylamino.

Bevorzugt sind Triazolopyridinazofarbstoffe der Formel I, in der einer der beiden Reste R² und R⁴ Cyano und der andere einen Rest der Formel D-N=N- bedeutet, worin D die obengenannte Bedeutung besitzt.

Bevorzugt sind Triazolopyridinazofarbstoffe der Formel I, in der R² Cyano bedeutet.

Bevorzugt sind weiterhin Triazolopyridinazofarbstoffe der Formel I, in der R⁵ Hydroxy bedeutet.

Bevorzugt sind weiterhin Triazolopyridinazofarbstoffe der Formel I, in der R³ C₁-C₄-Alkyl, insbesondere Methyl, bedeutet.

Bevorzugt sind weiterhin Triazolopyridinazofarbstoffe der Formel I, in der R¹ C₁-C₁₃-Alkyl, das gegebenenfalls durch 1 oder 2 Sauerstoffatome in Etherfunktion unterbrochen ist, oder C₁-C₁₃-Alkylthio bedeutet.

Bevorzugt sind weiterhin Triazolopyridinazofarbstoffe der Formel I, in der D-N=N- den Rest der Formel 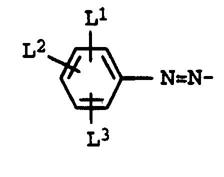 bedeutet, in der L¹, L² und L³ unabhängig voneinander jeweils für Wasserstoff, C₁-C₁₃-Alkyl, C₁-C₄-Alkoxy, C₁-C₄-Alkoxy-C₂-C₄-alkoxy, C₁-C₄-Alkylthio, Halogen oder L¹ und L² zusammen den Rest der Formel O-C₂H₄-O stehen.

Besonders bevorzugt sind Triazolopyridinazofarbstoffe der Formel I, in der D-N=N- den Rest der Formel 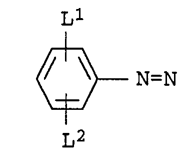 bedeutet, in der L¹ und L² unabhängig voneinander jeweils für Wasserstoff, C₁-C₄-Alkyl, C₁-C₄-Alkoxy oder C₁-C₄-Alkoxy-C₂-C₄-alkoxy stehen.

Die erfindungsgemäßen Triazolopyridinazofarbstoffe der Formel I können nach an sich bekannten Methoden hergestellt werden. Beispielsweise kann man auf an sich bekanntem Wege eine Diazokomponente der Formel II diazotieren und mit einer Kupplungskomponente der Formel III 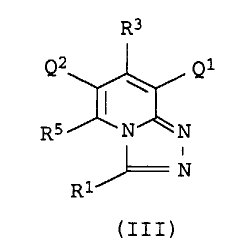 worin einer der beiden Reste Q¹ und Q² Wasserstoff und der andere Cyano, Carbamoyl, Carboxyl oder C₁-C₄-Alkoxycarbonyl bedeuten und R¹, R³ und R⁵ jeweils die obengenannte Bedeutung besitzen, kuppeln.

Die Kupplungskomponenten der Formel III sind an sich bekannt und z.B. in der älteren deutschen Patentanmeldung P 43 26 758.0 beschrieben.

Die erfindungsgemäßen Triazolopyridinazofarbstoffe eignen sich in vorteilhafter Weise zum Färben oder Bedrucken von textilen Materialien. Dies sind beispielsweise Fasern aus Celluloseestern oder Polyestern, aber auch aus Polyamiden, oder Mischgewebe aus Polyestern und Cellulosefasern. Man erhält dabei Färbungen oder Drucke mit hoher Thermofixierechtheit und hoher Brillanz. Die neuen Farbstoffe weisen auch eine hohe Farbstärke auf.

Um einen günstigen Farbaufbau zu erreichen, kann es in manchen Fällen von Vorteil sein, Mischungen der Farbstoffe der Formel I untereinander zum Färben zu verwenden.

Die erfindungsgemäßen Triazolopyridinazofarbstoffe eignen sich weiterhin vorteilhaft für die thermische Übertragung von einem Träger auf ein mit Kunststoff beschichtetes Papier mittels einer Energiequelle (siehe z.B. EP-A-416 434).

Die folgenden Beispiele sollen die Erfindung näher erläutern.

### Beispiel 1 (nicht beansprucht)

a) Diazotierung
   15,20 g (0,10 mol) 4-tert-Butylanilin wurden unter Kühlung in einer Mischung aus 40 ml Wasser und 30 g 35 gew.-%iger Salzsäure gelöst und mit 100 g Eis versetzt. Bei 0 bis 5°C wurden 32 g 23 gew.-%ige wäßrige Natriumnitritlösung zugetropft und 3 h bei 0 bis 5°C nachgerührt.
b) Kupplung
   5,05 g (0,025 mol) 4-Cyano-2-ethyl-7-hydroxy-5-methyl-1,2,4-triazolo[l,5-a]pyridin wurden in einer Mischung aus 10 ml N-Methylpyrrolidon, 30 g Eis, 4 g 50 gew.-%iger Natronlauge und 2 g Natriumhydrogencarbonat gelöst und mit ca. 100 g Eis versetzt. Die unter a) beschriebene Diazoniumsalzlösung wurde innerhalb von 4 h zwischen 0 bis 5°C zugetropft. Dann wurde 4 h nachgerührt. Nach beendeter Kupplung wurde abgesaugt, neutral gewaschen und bei 60°C unter vermindertem Druck getrocknet. Man erhielt 7,2 g (80 % d. Th.) des Farbstoffs der Formel 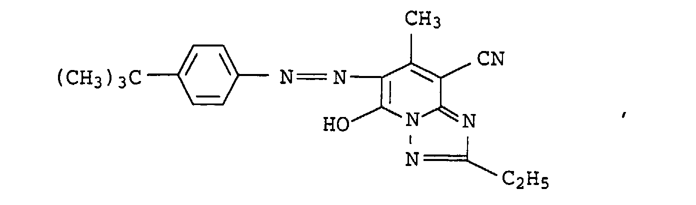 (Fp.: 226 - 228°C; λₘₐₓ (CH₂Cl₂): 476 nm)
   der Polyester in gelber Nuance färbt.

### Beispiel 2 (nicht beansprucht)

a) Diazotierung
   3,65 g (0,02 mol) 2-Butoxy-5-methylanilin wurden in 80 ml Eisessig/Propionsäure (3:1 v/v) und 16 ml 85 gew.-%iger Schwefelsäure gelöst. Bei maximal -5°C wurden 10,4 g Nitrosylschwefelsäure (ca. 42 Gew.-% N₂O₃) zugetropft und 2 h bei -5 bis 0°C nachgerührt.
b) Kupplung
   4,40 g (0,022 mol) 4-Cyano-2-ethyl-7-hydroxy-5-methyl-1,2,4-triazolo[1,5-a]pyridin wurden in 90 ml N-Methylpyrrolidon gelöst und mit 100 ml Wasser, 0,5 g Amidosulfonsäure und ca. 400 g Eis versetzt. Zu dieser Lösung wurde die unter a) beschriebene Diazoniumsalzlösung bei -5 bis 0°C getropft, wobei der pH-Wert mit 25 gew.-%iger Natronlauge auf 7,0 eingestellt wurde. Nach beendeter Kupplung wurde der Farbstoff bei 60°C abgesaugt, neutral gewaschen und bei 60°C unter vermindertem Druck getrocknet. Man erhielt 3,9 g (50 % d. Th.) des Farbstoffs der Formel 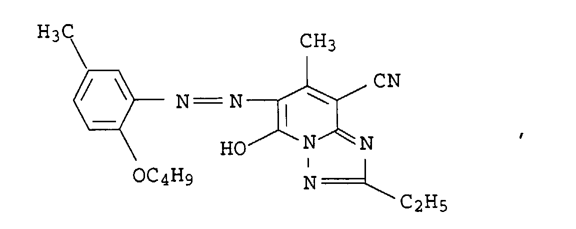 (Fp.: 206 - 210°C; λₘₐₓ (CH₂Cl₂): 505 nm)
   der Polyester in roter Nuance färbt.

In analoger Weise können die in den folgenden Tabellen 1 und 2 aufgeführten Farbstoffe erhalten werden.

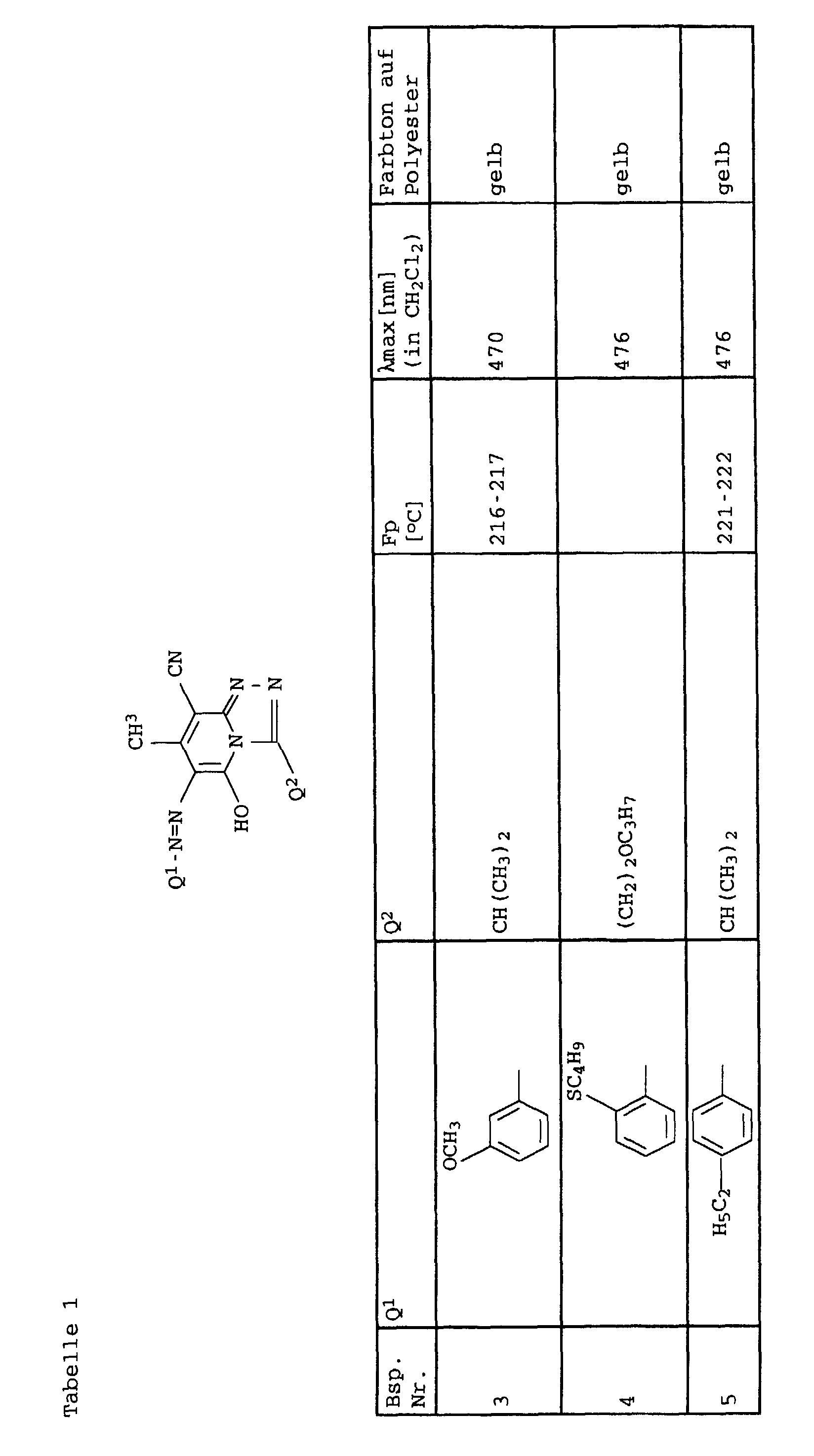

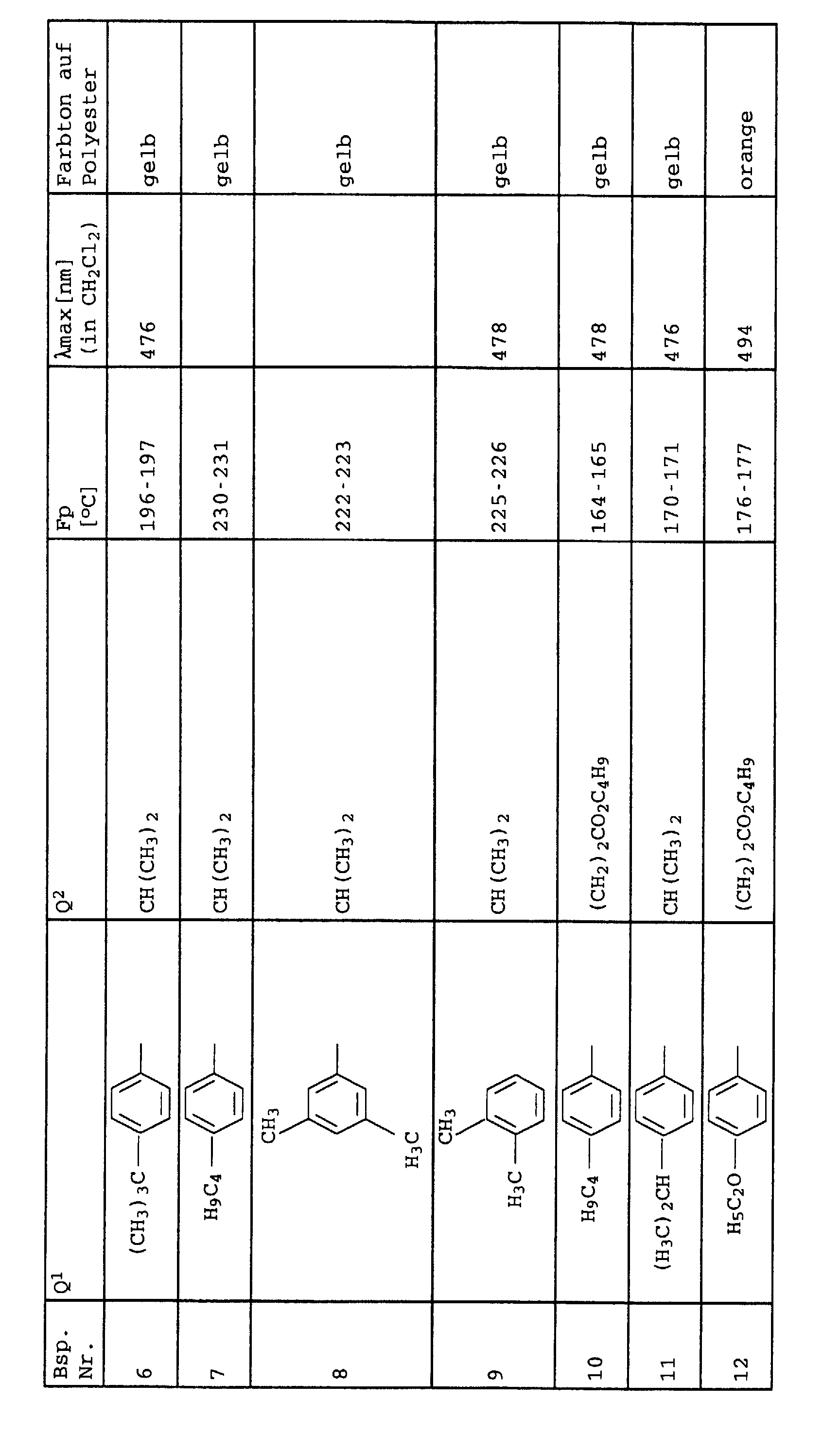

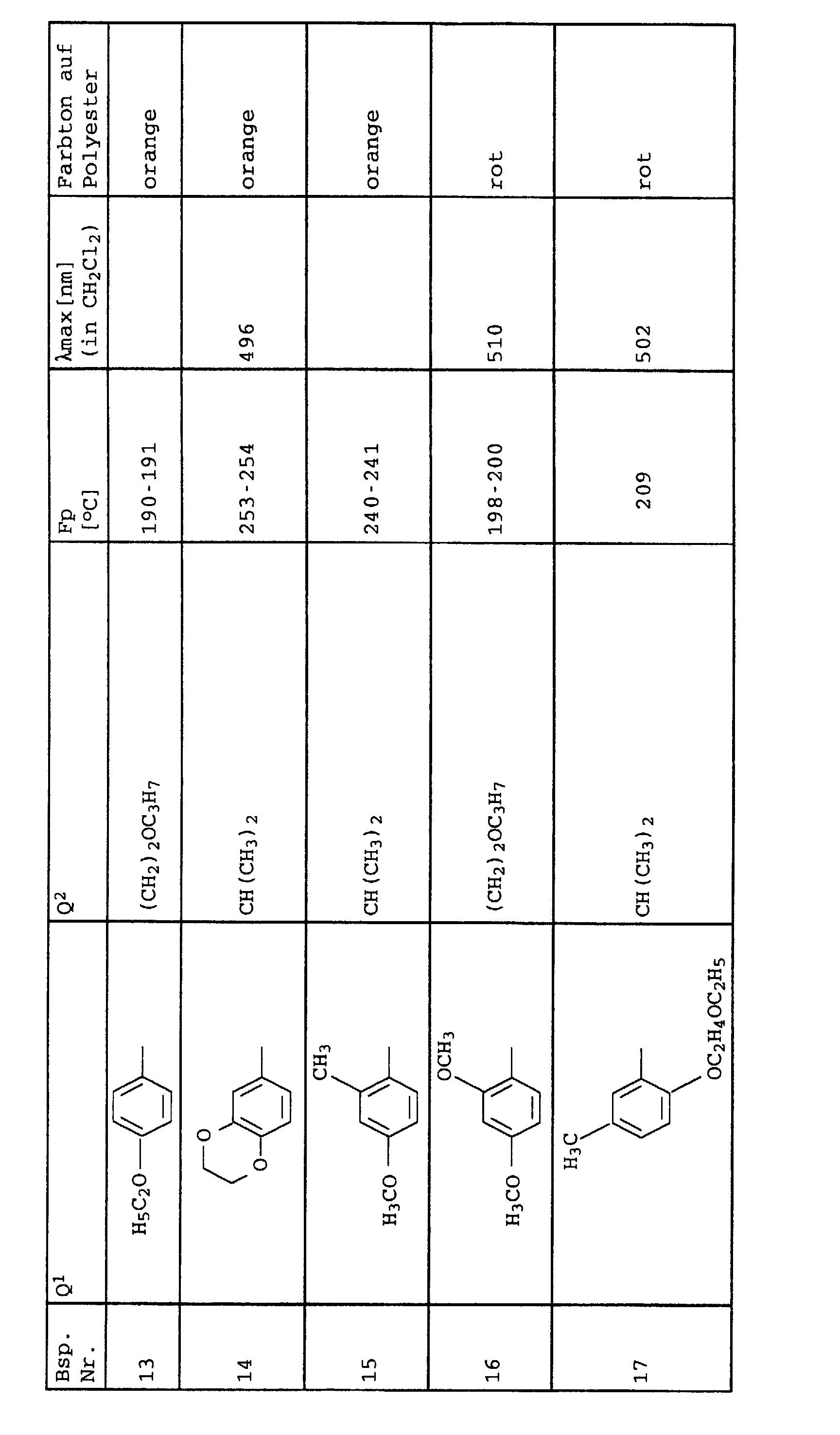

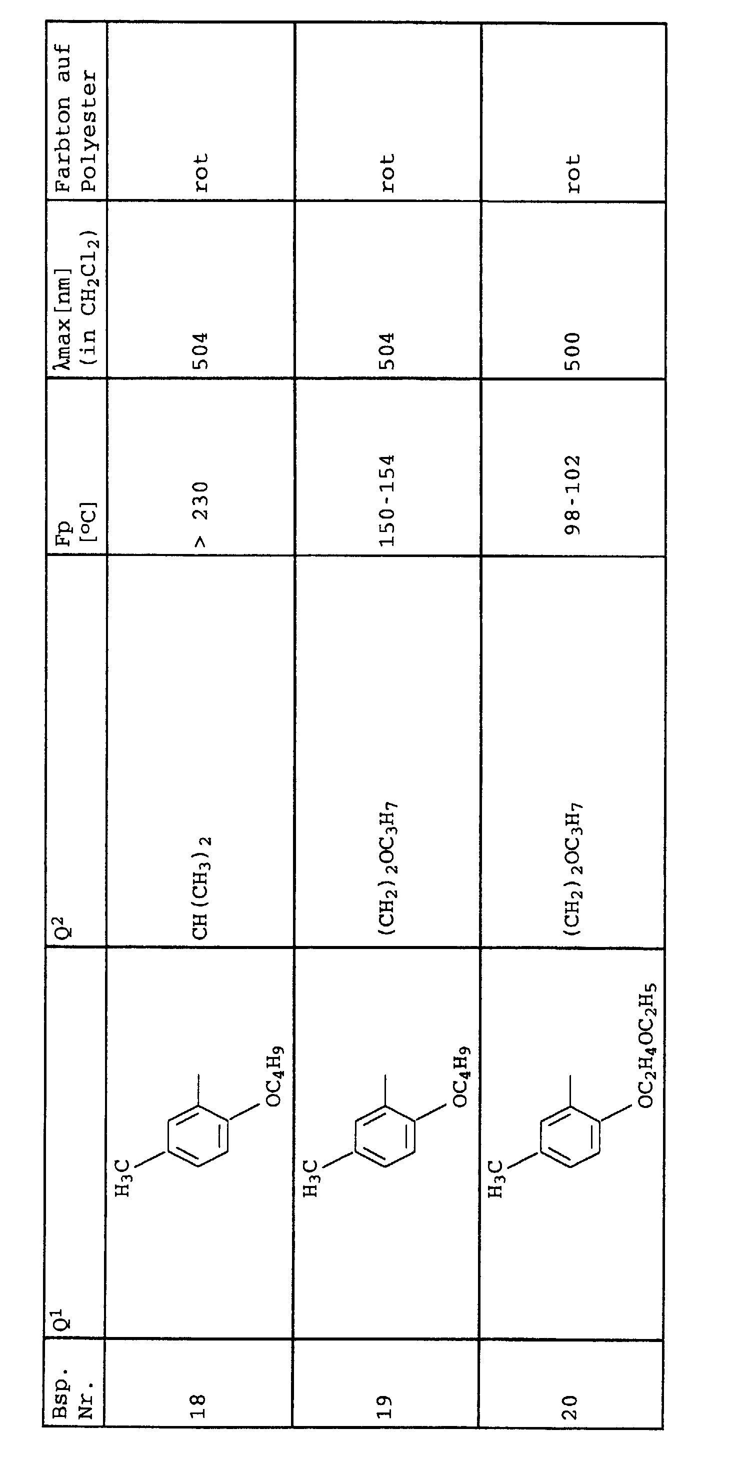

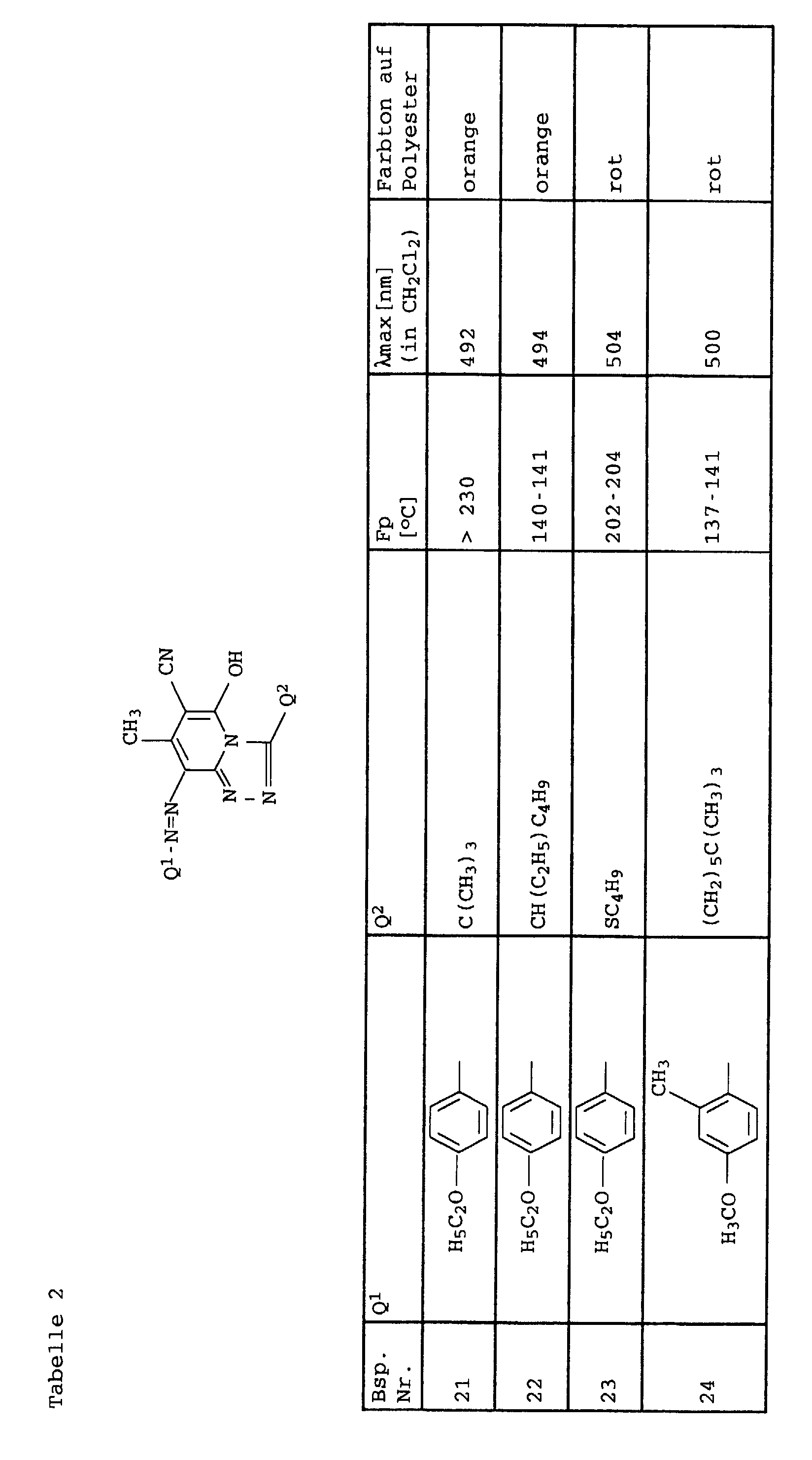

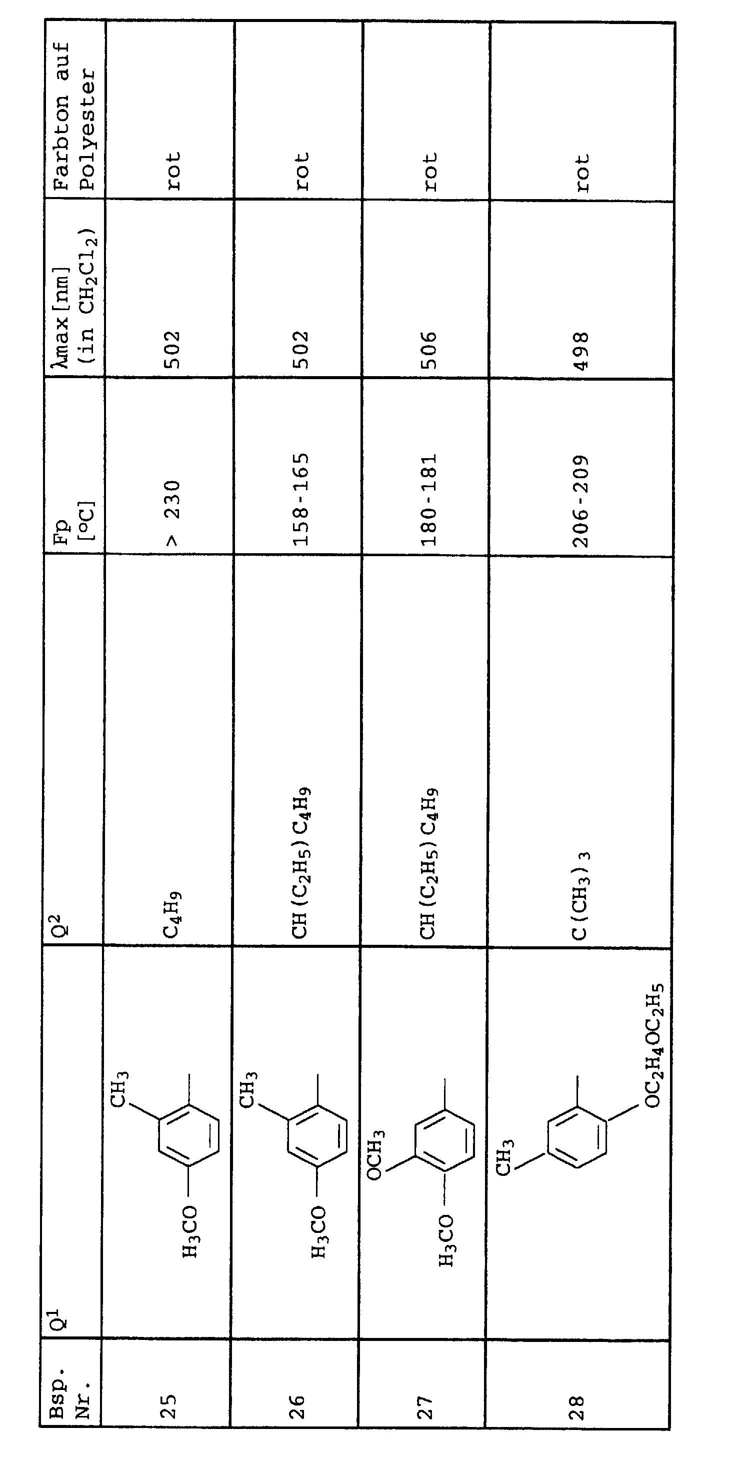

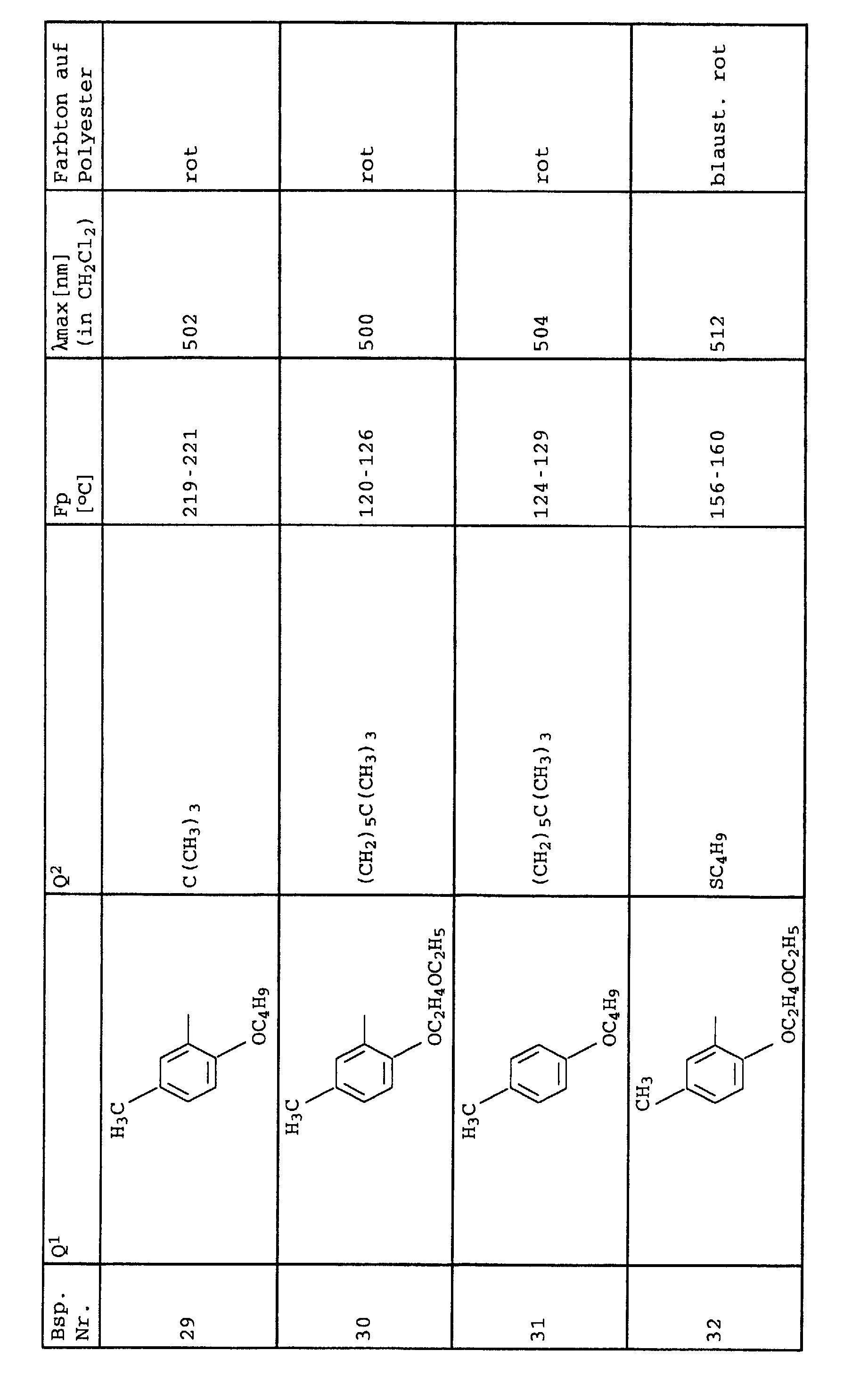

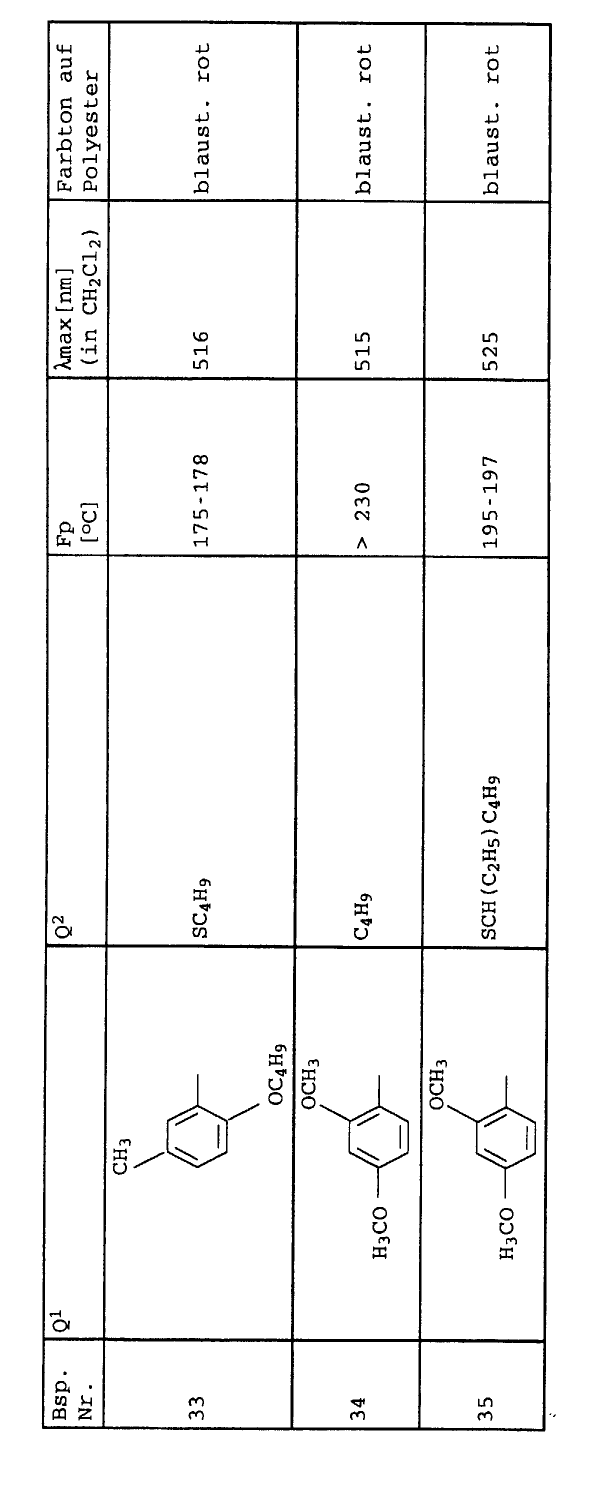

## Patentansprüche

1. Triazolopyridinazofarbstoffe der Formel I 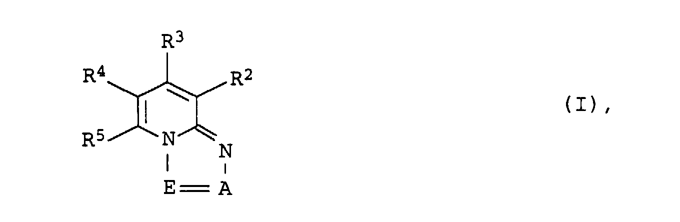 in der
A Stickstoff,
E einen Rest der Formel C-R¹, worin R¹ für C₁-C₂₀-Alkyl, das gegebenenfalls substituiert ist und durch 1 bis 4 Sauerstoffatome in Etherfunktion unterbrochen sein kann, gegebenenfalls substituiertes Phenyl, Mercapto oder gegebenenfalls substituiertes C₁-C₂₀-Alkylthio steht,
einer der beiden Reste R² und R⁴ Cyano, Carbamoyl, Carboxyl oder C₁-C₄-Alkoxycarbonyl und der andere einen Rest der Formel D-N=N-, worin D für einen Rest einer Diazokomponente aus der Anilinreihe steht,
R³ C₁-C₄-Alkyl, das gegebenenfalls durch ein Sauerstoffatom in Etherfunktion unterbrochen ist, oder Phenyl und
R⁵ Hydroxy, Mercapto, den Rest -NY¹Y², wobei Y¹ und Y² gleich oder verschieden sind und unabhängig voneinander jeweils für Wasserstoff oder C₁-C₄-Alkyl oder zusammen mit dem sie verbindenden Stickstoffatom für einen 5- oder 6-gliedrigen gesättigten heterocyclischen Rest stehen, oder den Rest einer CH-aciden Verbindung bedeuten.

2. Triazolopyridinazofarbstoffe nach Anspruch 1, dadurch gekennzeichnet, daß einer der beiden Reste R² und R⁴ Cyano und der andere einen Rest der Formel D-N=N- bedeutet, worin D die in Anspruch 1 genannte Bedeutung besitzt.

3. Triazolopyridinazofarbstoffe nach Anspruch 1, dadurch gekennzeichnet, daß R² Cyano bedeutet.

4. Triazolopyridinazofarbstoffe nach Anspruch 1, dadurch gekennzeichnet, daß R³ C₁-C₄-Alkyl bedeutet.

5. Triazolopyridinazofarbstoffe nach Anspruch 1, dadurch gekennzeichnet, daß R¹ C₁-C₁₃-Alkyl, das gegebenenfalls durch 1 oder 2 Sauerstoffatome in Etherfunktion unterbrochen ist, oder C₁-C₁₃-Alkylthio bedeutet.

6. Triazolopyridinazofarbstoffe nach Anspruch 1, dadurch gekennzeichnet, daß R⁵ Hydroxy bedeutet.

7. Verwendung der Triazolopyridinazofarbstoffe nach Anspruch 1 zum Färben oder Bedrucken von textilen Materialien.

## Claims

1. A triazolopyridine azo dyestuff of the formula I 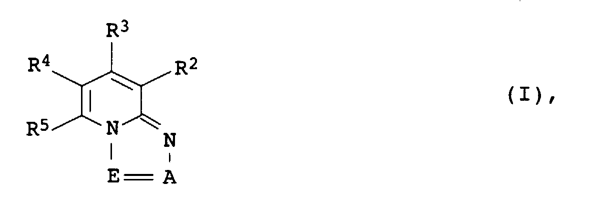 where
A is nitrogen,
E is a radical of the formula C-R¹, where R¹ is C₁-C₂₀-alkyl, which is unsubstituted or substituted and can be interrupted by 1 to 4 ether oxygen atoms, or is unsubstituted or substituted phenyl, mercapto or unsubstituted or substituted C₁-C₂₀-alkylthio,
one of the two radicals R² and R⁴ is cyano, carbamoyl, carboxyl or C₁-C₄-alkoxycarbonyl and the other is a radical of the formula D-N=N-, where D is a radical of a diazo component from the aniline series,
R³ is C₁-C₄-alkyl which may be interrupted by an ether oxygen atom, or phenyl and
R⁵ is hydroxyl, mercapto, the radical -NY¹Y², where Y¹ and Y² are identical or different and independently of one another in each case are hydrogen or C₁-C₄-alkyl or, together with the nitrogen atom bonding them, are a 5- or 6-membered saturated heterocyclic radical, or the radical of a CH-acidic compound.

2. A triazolopyridine azo dyestuff as claimed in claim 1, wherein one of the two radicals R² and R⁴ is cyano and the other is a radical of the formula D-N=N-, where D has the meaning mentioned in claim 1.

3. A triazolopyridine azo dyestuff as claimed in claim 1, wherein R² is cyano.

4. A triazolopyridine azo dyestuff as claimed in claim 1, wherein R³ is C₁-C₄-alkyl.

5. A triazolopyridine azo dyestuff as claimed in claim 1, wherein R¹ is C₁-C₁₃-alkyl which may be interrupted by 1 or 2 ether oxygen atoms, or is C₁-C₁₃-alkylthio.

6. A triazolopyridine azo dyestuff as claimed in claim 1, wherein R⁵ is hydroxyl.

7. The use of the triazolopyridine azo dyestuff as claimed in claim 1 for dyeing or printing textile materials.

## Revendications

1. Colorant triazolopyddinazoïque de formule I 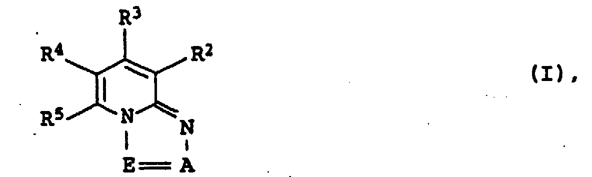 dans laquelle
A représente un atome d'azote,
E représente un reste de formule C-R¹, où R¹ est mis pour un groupement alkyle en C₁-C₂₀, éventuellement substitué et pouvant être interrompu par 1 à 4 atomes d'oxygène en liaison éther, un groupement phényle éventuellement substitué, un groupement mercapto ou un groupement alkylthio en C₁-C₂₀ éventuellement substitué,
l'un des deux restes R² et R⁴ représente un groupement cyano, carbamoyle, carboxyle ou alcoxycarbonyle en C₁-C₄ et l'autre un reste de formule D-N=N-, où D est mis pour un reste d'un composant diazo de la série de l'aniline,
R³ représente un groupement alkyle en C₁-C₄, pouvant être interrompu par un atome d'oxygène en fonction éther, ou un groupement phényle et
R⁵ représente un groupement hydroxy, mercapto, le reste -NY¹Y², où Y¹ et Y² sont identiques ou différents et représentent indépendamment l'un de l'autre un atome d'hydrogène ou un groupement alkyle en C₁-C₄, ou bien forment, avec l'atome d'azote qui les relie, un reste hétérocyclique saturé à 5 ou 6 maillons, ou le reste d'un composé à CH acide.

2. Colorant triazolopyridinazoïque selon la revendication 1, caractérisé en ce que l'un des deux restes R² et R⁴ représente un groupement cyano et l'autre un reste de formule D-N=N-, où D prend la signification mentionnée dans la revendication 1.

3. Colorant triazolopyridinazoïque selon la revendication 1, caractérisé en ce que R² représente un groupement cyano.

4. Colorant triazolopyridinazoïque selon la revendication 1, caractérisé en ce que R³ représente un groupement alkyle en C₁-C₄.

5. Colorant triazolopyridinazoïque selon la revendication 1, caractérisé en ce que R¹ représente un groupement alkyle en C₁-C₁₃, pouvant être interrompu par 1 ou 2 atomes d'oxygène en fonction éther, ou un groupement alkylthio en C₁-C₁₃.

6. Colorant triazolopyridinazoïque selon la revendication 1, caractérisé en ce que R⁵ représente un groupement hydroxyle.

7. Utilisation de colorants triazolopyridinazoïques selon la revendication 1 pour la teinture ou l'impression de matériaux textiles.
